# FASCICULE DE BREVET EUROPEEN

(11) **EP 1 052 559 B1**
(45) Date de publication et mention de la délivrance du brevet: **02.08.2006**
(21) Numéro de dépôt: 00401092.2
(22) Date de dépôt: 19.04.2000
(51) Int. Cl.: G05B 19/042

(54) **Nécessaire et procédé de construction de plusieurs installations industrielles complexes**
Konstruktionssatz und Verfahren zur Konstruktion von mehreren komplexen industriellen Anlagen
Kit and method for the construction of several complex industrial facilities

(30) Priorité: 12.05.1999 FR 9906089
(43) Date de publication de la demande: 15.11.2000
(73) Titulaire: L'air Liquide, S.A. à Directoire et Conseil de Surveillance pour l'Etude et l'Exploitation des Procédés Georges Claude, 75321 Paris Cedex 07 (FR)
(72) Inventeur: Rotman, Frédéric, 75017 Paris (FR); Willemot, Antoine, 91190 Gif-sur-Yvette (FR); Barry, Lionel, 94220 Charenton le Pont (FR); Ferenczi, Laurent, 95620 Parmain (FR)
(74) Mandataire: Le Moenner, Gabriel

(56) Documents cités:
- FR-A- 2 770 287
- FR-A- 2 785 062
- GB-A- 2 197 910
- US-A- 4 802 100
- US-A- 5 496 388
- FISHER-ROSEMOUNT: "INTEGRATED SUITES FOR BUILDING COMPETITIVE ADVANTAGE" PLANTWEB BUILDER, 1998, XP002144951 USA
- "CATALOGO GENERAL DE EQUIPOS Y SISTEMAS. VERSION E-09.94, TOMO II" septembre 1994 (1994-09) , STAEFA CONTROL SYSTEMS , SPAIN XP002131836 * page 401-5 * * page 401-7 * * page 402-2 - page 403-2 * * page 405-1 - page 409-1 * * page 503-1 - page 513-2 * * page 600-4 - page 603-1 * * page 610-1 - page 615-1 * * page 616-1 - page 617-1 * * page 642-1 * * page 644-1 * * page 700-1 - page 702-1 * * page 704-1 * * page 711-1 * * page 811-1 * * page 901-1 * * page 910-1 * * page 912-1 * * page 1223-0 - page 1223-1 * * page 1228-1 * * page 1306-1 - page 1402-1 * * page 1404-2 - page 1404-3 * * page 1405-0 - page 1405-1 * * page 1415-2 - page 1500-1 * * page 1502-1 * * page 1600-1 - page 1600-2 * * page 1601-1 - page 1601-2 *
- MESA A A ET AL: "Design of the maximum energy efficiency desalination plant (PAME)" DESALINATION,NL,ELSEVIER SCIENTIFIC PUBLISHING CO, AMSTERDAM, vol. 108, no. 1, 1 février 1997 (1997-02-01), pages 111-116, XP004053166 ISSN: 0011-9164
- "INSTRUPEDIA 97. YOUR INTERACTIVE ENCYCLOPEDIA FOR INSTRUMENTATION" 1997 , NATIONAL INSTRUMENTS CORPORATION , U.S.A. XP002131837 * page 6-6 - page 6-12 *

## Description

La présente invention concerne un nécessaire de construction de plusieurs installations industrielles complexes pour le traitement de fluides.

Dans de nombreux sites de production industrielle, il est prévu des moyens de production locale de gaz ayant des compositions et des pressions déterminées.

Ainsi, des équipements de production, constituant ensemble une installation industrielle complexe, sont installés sur site pour traiter les gaz, généralement extraits de l'air, et envoyer ceux-ci vers l'installation utilisatrice.

Lorsque l'installation utilisatrice requiert la fourniture de plusieurs fluides distincts, l'installation de production prévue en amont est relativement complexe, afin de satisfaire aux besoins. Dans le cas d'une telle demande, deux types d'installation sont actuellement proposés.

Dans une première solution, des équipements destinés chacun à la production d'un fluide sont juxtaposés afin de fournir les fluides nécessaires à l'installation utilisatrice. Ainsi, par exemple, sont disposés côte à côte une centrale d'air comprimé, un générateur d'azote impur et un générateur d'azote pur.

Cette solution présente l'inconvénient de dupliquer inutilement certaines fonctions mises en oeuvre de manière redondante dans plusieurs équipements. Il s'agit, par exemple, de la fonction de compression ou de séchage de l'air qui est nécessaire tant dans la centrale d'air comprimé que dans les générateurs d'azote.

Cette duplication des fonctions engendre des surcoûts d'investissement et d'exploitation. De plus, dans de telles installations, les équipements destinés à la production de chacun des gaz sont souvent surdimensionnés afin de pouvoir répondre à tout moment à une demande variable.

Une seconde solution consiste à utiliser une installation "sur mesure" développée spécifiquement pour répondre de manière optimale aux besoins de l'installation utilisatrice.

Cette solution conduit à une optimisation de l'installation de production. Toutefois, elle implique des frais d'étude élevés et rend difficile son exploitation industrielle, du fait de l'unicité de l'installation. De plus, l'évolution ultérieure d'une telle installation est difficilement gérable si la demande de l'installation consommatrice évolue. Enfin, une telle installation est difficilement réutilisable dans un autre contexte.

L'invention a pour but de proposer des moyens pour la création d'installations industrielles complexes permettant, avec un investissement minimal, de créer une large gamme d'installations industrielles.

A cet effet, l'invention a pour objet un nécessaire de construction de plusieurs installations industrielles complexes pour le traitement de fluides, caractérisée en ce qu'il comporte :
- plusieurs ensembles, les modules fonctionnels étant aptes chacun à réaliser une opération élémentaire sur au moins un fluide d'une installation industrielle, dans lesquels :

- chaque module fonctionnel comporte au moins une entrée et au moins une sortie pour le passage d'un fluide, ainsi qu'une unité locale de gestion du module fonctionnel commandant le fonctionnement du module fonctionnel pour la mise en oeuvre de l'opération élémentaire associée, l'unité locale de gestion comportant une interface de communication,
- tous les modules fonctionnels d'un même ensemble sont adaptés pour réaliser la même opération élémentaire sur un fluide, et sont réalisés de manière standard, de sorte que les spécificités des entrées, des sorties et des interfaces de communication de tous les modules fonctionnels d'un même ensemble sont analogues, et
- les modules fonctionnels sont adaptés pour être associés fonctionnellement les uns aux autres par leurs entrées et sorties dans des installations industrielles, afin d'assurer des opérations élémentaires successives sur le fluide,
lequel nécessaire comporte en outre, pour chaque installation industrielle, une unique unité centrale de pilotage, adaptée pour piloter l'installation industrielle associée, en adressant des ordres de pilotage aux unités locales de gestion des modules fonctionnels standards de l'installation industrielle, au travers des interfaces de communication reliées à l'unité centrale de pilotage par un réseau de communication.

Suivant des modes particuliers de réalisation, le nécessaire de construction comporte l'une ou plusieurs des caractéristiques suivantes :
- l'unité locale de gestion de chaque module fonctionnel standard est adapté pour adresser des messages d'information à l'unité centrale de pilotage de l'installation, lesquels messages d'information sont représentatifs de l'état de fonctionnement du module fonctionnel, ou de l'état du fluide sur lequel opère le module fonctionnel ;
- l'unité centrale de pilotage de chaque installation comporte des moyens de recueil des besoins des équipements utilisateurs reliés en sortie de l'installation, au travers d'un réseau de transfert de données ;
- il comporte un ensemble de modules standards d'alimentation adaptés pour assurer l'alimentation en énergie d'une partie des modules fonctionnels de chaque installation sous la commande de l'unité de pilotage de l'installation ;
- il comporte un ensemble de modules standards de contrôle adaptés pour relever des informations sur le fluide circulant d'une installation et transmettre ces informations à l'unité centrale de pilotage de ladite installation ; et
- il comporte un ensemble de modules standards de génération d'énergie électrique adaptés pour assurer la production d'électricité à partir d'énergie fournie par d'autres modules standards de l'installation.

L'invention a en outre pour objet un procédé de construction de plusieurs installations industrielles complexes pour le traitement de fluides, caractérisé en ce qu'il comporte les étapes consistant à :
A) fabriquer des ensembles, les modules fonctionnels étant aptes chacun à réaliser une opération élémentaire d'une installation industrielle, dans lesquels :
   - chaque module fonctionnel comporte au moins une entrée et au moins une sortie pour le passage d'un fluide, ainsi qu'une unité locale de gestion du module fonctionnel commandant le fonctionnement du module fonctionnel pour la mise en oeuvre de l'opération élémentaire associée, l'unité locale de gestion comportant une interface de communication, et
   - tous les modules fonctionnels d'un même ensemble sont adaptés pour réaliser la même opération élémentaire sur un fluide, et sont réalisés de manière standard, de sorte que les spécificités des entrées, des sorties et des interfaces de communication de tous les modules fonctionnels d'un même ensemble sont analogues ;
B) fabriquer pour chaque installation industrielle, une unité centrale de pilotage adaptée pour piloter l'installation industrielle associée, en adressant des ordres de pilotage aux unités locales de gestion de chaque module fonctionnel standard de l'installation, au travers des interfaces de communication reliées à l'unité centrale de pilotage par un réseau de communication ;
C) associer fonctionnellement, dans chaque installation industrielle, les modules fonctionnels les uns aux autres par leurs entrées et sorties, afin d'assurer les opérations élémentaires successives sur le fluide de chaque installation industrielle complexe ; et
D) installer dans chaque installation industrielle une unité centrale de pilotage reliée aux interfaces de communication de tous les modules fonctionnels standards de l'installation par un réseau de communication.

L'invention sera mieux comprise à la lecture de la description qui va suivre, donnée uniquement à titre d'exemple, et faite en se référant aux dessins sur lesquels :
- la figure 1 est une vue schématique d'un exemple de nécessaire de construction selon l'invention, dont les modules fonctionnels sont utilisés dans deux installations industrielles ou sont disposés dans un stock ; et
- la figure 2 est une vue schématique d'une autre installation industrielle pouvant être fabriquée à l'aide du nécessaire selon l'invention.

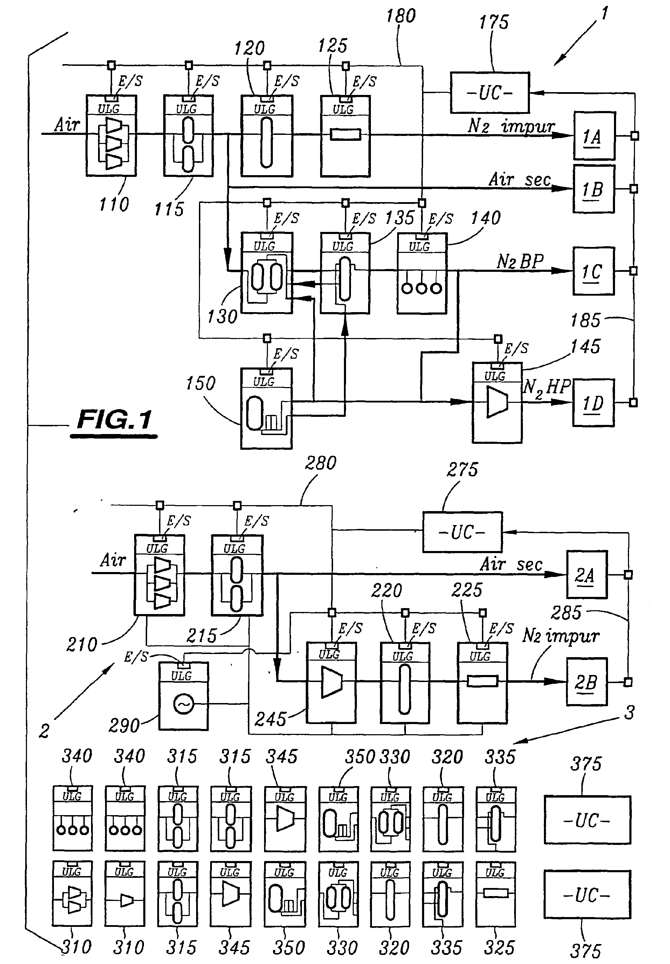

Le nécessaire de construction représenté sur la figure 1 comporte une pluralité de modules fonctionnels standards répartis en fonction de leur type en plusieurs ensembles. Les modules fonctionnels d'un même ensemble sont tous adaptés pour réaliser la même opération ou étape élémentaire conduisant à une transformation principale d'un fluide.

L'expression opération élémentaire désigne une transformation d'un type donné pouvant être opérée sur un fluide, telle que par exemple, la modification de sa température, de sa pression, de sa composition et/ou de toutes autres variables d'état.

En pratique, une transformation du fluide s'exerce par application d'une fonction principale à laquelle peut être associée une ou plusieurs fonctions connexes destinées à favoriser la mise en oeuvre de la fonction principale.

Par exemple, la fonction principale d'un module de compression est d'augmenter la pression d'un gaz par exemple par l'action d'une vis. Une fonction connexe dans ce cas est la réfrigération du gaz qui en résulte. Une autre fonction connexe est par exemple la filtration opérée en aval de la vis du compresseur et qui conduit à un retrait des impuretés du gaz.

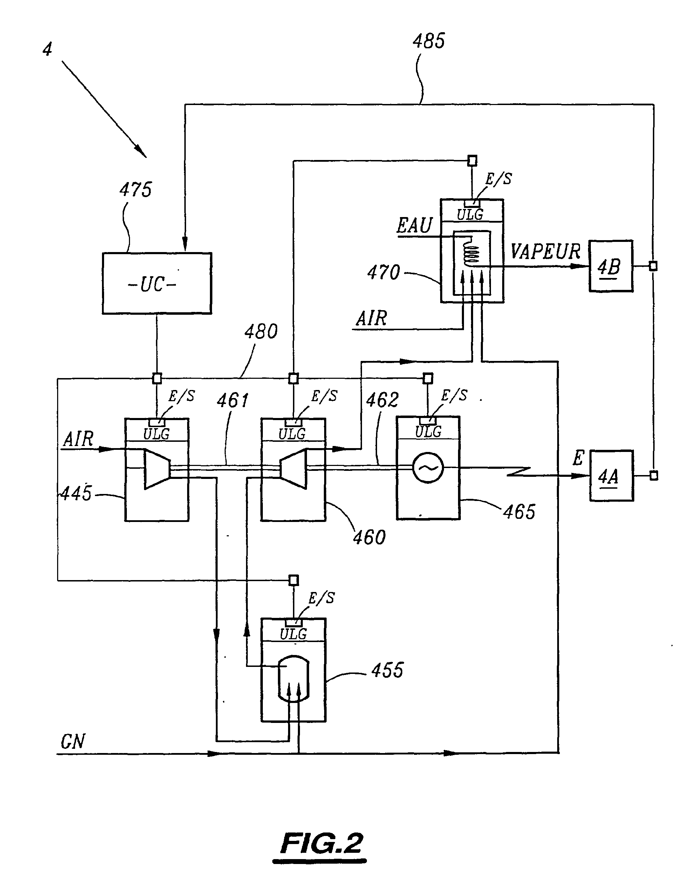

Les modules fonctionnels du nécessaire de construction représenté sur la figure 1 sont répartis dans deux installations de production de gaz notées 1, 2 et dans un stock de modules fonctionnels désigné par la référence générale 3. La figure 2 montre une autre installation 4 réalisée à partir du nécessaire selon l'invention.

Sur les figures, les modules fonctionnels standards d'un même ensemble de modules fonctionnels sont désignés par des références à 3 chiffres, dont les deux derniers chiffres sont identiques et représentatifs de l'ensemble auquel ils appartiennent et dont le premier chiffre est égal à 1, 2 ou 4 en fonction de l'installation 1, 2 ou 4 dans laquelle ils sont implantés, ou est égal au chiffre 3 si les modules fonctionnels sont entreposés dans le stock 3.

L'installation 1 est adaptée pour produire, à partir de l'air atmosphérique, de l'azote impur, de l'air sec, de l'azote basse pression et de l'azote haute pression. Ces gaz sont acheminés jusqu'à des équipements consommateurs notés 1A, 1B, 1C et 1D respectivement.

L'installation de la figure 1 comporte, en entrée, un module de compression standard 110. Celui-ci comporte 3 compresseurs montés en parallèle.

Comme tout module fonctionnel du nécessaire selon l'invention, le module 110 comporte une unité locale de gestion, notée ULG. Celle-ci est apte à commander le fonctionnement du module fonctionnel pour la mise en oeuvre de l'opération élémentaire associée. Dans le cas présent, l'unité locale de gestion ULG est adaptée pour gérer localement le fonctionnement des trois compresseurs montés en parallèle.

Les unités locales de gestion ULG de tous les modules fonctionnels du nécessaire selon l'invention comportent une interface de communication, notée E/S, adaptée pour la transmission de données depuis et vers le module fonctionnel correspondant.

Avantageusement, l'unité locale de gestion ULG est constituée d'un ordinateur de type PC ou d'un automate programmable mettant en oeuvre un programme adapté.

En sortie du module de compression est disposé un module de séchage 115 comportant 2 bouteilles d'adsorption montées en parallèle.

La sortie du module de séchage 115 alimente directement en air sec l'équipement consommateur 1 B.

Sur une dérivation alimentant en azote impur l'équipement consommateur 1A sont disposés en série un module de traitement d'air 120 et un module de perméation 125.

Le module de traitement d'air 120 comporte des filtres, alors que le module de perméation 125 comporte une ou plusieurs membranes perméables sélectivement à l'azote et à l'oxygène.

La sortie du module de séchage 115, est reliée par l'intermédiaire d'une seconde dérivation, à plusieurs autres modules fonctionnels alimentant les équipements consommateurs 1C et 1D en azote basse et haute pression.

Sur cette dérivation est disposé d'abord un module de dessication-décarbonatation 130. Celui-ci comporte deux bouteilles d'adsorption montées en parallèle.

En sortie du module de dessication-décarbonatation est prévu un module de distillation 135 et un module de contrôle 140. Le module de distillation 135 comporte une colonne de distillation, alors que le module de contrôle 140 comporte un ensemble de capteurs de pression.

La sortie du module de contrôle 140 est reliée à l'équipement consommateur 1C et alimente celui-ci en azote basse pression.

La sortie du module de contrôle 140 est également reliée à un module de surpression 145 comportant un surpresseur. Le module de surpression 145 alimente l'équipement consommateur 1 D en azote haute pression.

En outre, l'installation comporte un module de stockage 150 relié à une entrée du module de dessication-décarbonatation 130 pour l'alimentation de ce dernier. Des sorties du module de stockage 150 sont également reliées, d'une part, au module de distillation 135 et, d'autre part, au module de surpression 145.

Comme indiqué précédemment, tous les modules fonctionnels du nécessaire selon l'invention comportent chacun une unité locale de gestion ULG assurant la gestion de la fonction assurée par le module fonctionnel associé.

Dans chaque installation, réalisée à partir du nécessaire selon l'invention, les différents modules fonctionnels sont reliés à une même unité centrale de pilotage 175 propre à l'installation, par l'intermédiaire d'un réseau de communication 180. Ce réseau est par exemple de type ETHERNET, FIP, PROFIBUS ou MODBUS. Chaque module fonctionnel, relié au réseau 180 par son interface de communication E/S peut ainsi, d'une part, recevoir des ordres de commande de l'unité centrale de pilotage 175 et, d'autre part, adresser à celle-ci des messages d'information relatifs à son état de fonctionnement.

Le fonctionnement d'un module fonctionnel donné est géré localement par l'unité locale de gestion en fonction des seuls ordres de commande reçus depuis l'unité centrale de pilotage.

En outre, chaque équipement consommateur 1A, 1B, 1C, 1D est relié à l'unité centrale de pilotage 175 par un réseau de transfert de données 185 afin de communiquer à celle-ci ses besoins concernant la ressource fournie par l'installation.

L'unité centrale de pilotage 175 assure la fonction de " chef d'orchestre " en commandant le fonctionnement de chaque module fonctionnel de l'installation en fonction des besoins des équipements consommateurs et en tenant compte des informations communiquées par les modules fonctionnels, ces informations étant relatives notamment à leur disponibilité.

Les ordres de commande adressés par l'unité centrale de pilotage comportent essentiellement des valeurs de consignes devant être atteintes en sortie des modules fonctionnels. Il s'agit par exemple d'un débit d'air pour un module de compression, d'un degré d'hygrométrie pour un module de séchage, ou encore d'une composition minimale en un constituant donné pour un module de perméation ou de distillation.

Les messages d'information émis par chaque module fonctionnel vers l'unité centrale de pilotage comportent essentiellement des données relatives à l'état du fluide sur lequel opère le module fonctionnel et des données relatives à l'état ou aux besoins du module fonctionnel.

Les données relatives à l'état du fluide se répartissent en variables intensives, telles que la température, la pression ou la composition du fluide et en variables extensives tels que le volume ou la masse du fluide traité.

Les données relatives à l'état ou aux besoins du module fonctionnel ont trait notamment à l'état actuel de fonctionnement du module et à ses capacités futures à mettre en oeuvre l'opération à laquelle il est destiné. De plus, ces données ont trait également aux besoins en ressources, notamment énergétiques, nécessaires pour le fonctionnement correct du module fonctionnel.

Selon l'invention, les modules fonctionnels standards d'un même ensemble sont réalisés de manière standard, de sorte que les spécificités des entrées, des sorties et des interfaces de communication E/S sont analogues.

Ainsi, les modules fonctionnels d'un même ensemble sont tous aptes à réaliser la même opération ou étape élémentaire sur un fluide en vue de produire un changement d'état de ce fluide.

Les modules sont ainsi tous interchangeables entre eux du fait de l'analogie de leurs entrée et sortie. De plus, ils sont susceptibles de recevoir des ordres de commande d'une quelconque unité centrale de pilotage d'une installation de leur unité locale de gestion ULG.

L'analogie entre les entrées et les sorties des différents modules fonctionnels d'un même ensemble s'apprécie par leurs similitudes fonctionnelles, à savoir admettre ou évacuer un fluide de nature donnée dans des conditions déterminées. Toutefois, le diamètre des entrées et sorties, ou encore les raccords qui y sont disposés peuvent être différents, des éléments d'adaptation étant alors nécessaires lors du remplacement d'un module fonctionnel donné par un autre module fonctionnel du même ensemble.

L'installation 2 représentée sur la figure 1 est réalisée avec le nécessaire de construction selon l'invention. Elle est adaptée pour, à partir d'air atmosphérique, fournir de l'air sec à un équipement consommateur 2A et de l'azote impur à un équipement consommateur 2B.

Selon l'invention, l'installation 2 est réalisée à partir de modules fonctionnels standards et d'une unité centrale de pilotage issue du nécessaire de construction.

L'installation 2 comporte, en entrée, un module de compression 210 monté en série avec un module de séchage 215. La sortie du module de séchage 215 est reliée directement à l'équipement consommateur 2A pour son alimentation en air sec.

En outre, une dérivation assure l'acheminement d'une partie de l'air sec obtenu en sortie du module de séchage 215 vers un module de surpression 245. En sortie de ce dernier sont disposés successivement un module de traitement d'air 220 et un module de perméation 225. La sortie de ce dernier est reliée à l'équipement consommateur 2B pour son alimentation en azote impur.

Chacun des modules fonctionnels de l'installation 2 est relié à une unité centrale de pilotage 275 au travers d'un réseau de communication 280. Cette liaison est effectuée par l'intermédiaire des interfaces de communication E/S de chaque module fonctionnel.

Les équipements consommateurs 2A et 2B sont reliés à l'unité centrale de pilotage 275 par un réseau de transfert de données 285 permettant aux équipements consommateurs de transmettre leurs besoins à l'unité centrale de pilotage.

En outre, un module d'alimentation 290 est prévu pour l'alimentation en énergie électrique de chacun des modules fonctionnels de l'installation 2. Ce module d'alimentation 290 comporte par exemple un groupe électrogène. Il est équipé d'une unité locale de gestion ULG adaptée pour assurer le pilotage du groupe électrogène. L'unité locale de gestion ULG comporte une interface de communication E/S reliée au réseau 280. Ainsi, le module d'alimentation reçoit des ordres de commande de l'unité centrale de pilotage 275 pour déterminer son niveau de production en fonction des besoins des modules fonctionnels alimentés.

Le stock 3 contient différents modules fonctionnels de chaque ensemble. Ces modules fonctionnels sont désignés comme précédemment par une référence numérique dont le premier chiffre est 3 et dont les deux seconds chiffres désignent l'ensemble auquel appartiennent les modules fonctionnels.

Ainsi, le stock 3 comporte deux modules de compression standards 310. Ces modules de compression comportent pour l'un deux compresseurs et pour l'autre un compresseur.

De même, le stock 3 comporte trois modules de séchage 315, deux modules de traitement d'air 320, un module de perméation 325, deux modules de dessication-décarbonatation 330, deux modules de distillation 335, deux modules de contrôle 340, deux modules de surpression 345 et deux modules de stockage 350.

En outre, le stock comporte deux unités centrales de pilotage 375.

Sur la figure 2 est représentée une installation de co-génération de vapeur et d'électricité réalisée à partir d'un nécessaire de construction selon l'invention.

Ainsi, les modules fonctionnels mis en oeuvre dans cette installation sont standards et chacun adapté pour la mise en oeuvre d'une opération élémentaire. Les modules fonctionnels sont commandés par une unité centrale de pilotage.

L'installation représentée sur la figure 2 est adaptée pour produire à la fois de l'énergie électrique et de la vapeur d'eau à partir d'air atmosphérique et de gaz naturel. L'énergie électrique est fournie à un équipement consommateur 4A et la vapeur d'eau est fournie à un équipement consommateur 4B.

L'installation 4 comporte un module de combustion 455 comportant une chambre de combustion dont le fonctionnement est géré par l'unité locale de gestion ULG propre au module fonctionnel.

Le module de combustion 455 comporte une entrée d'introduction de gaz naturel et une entrée d'introduction d'un gaz comburant formé d'air comprimé. Ces entrées alimentent la chaudière pour l'établissement d'une flamme.

L'installation comporte un module de compression 445, recevant en entrée de l'air atmosphérique, et dont la sortie alimente le module de combustion 455 en air comprimé.

La sortie du module de combustion 455 est reliée à un module de détente 460 comportant une turbine à gaz. La turbine à gaz du module de détente 460 est reliée mécaniquement par l'intermédiaire d'un arbre 461 au compresseur du module de compression 445, pour entraîner celui-ci.

En outre, la turbine du module de détente 460 est reliée mécaniquement à un module de production d'énergie électrique 465 par un arbre 462. Le module de production d'énergie électrique 465 comporte un alternateur entraîné par l'arbre 462.

Ainsi, sous l'action des gaz brûlés issus du module de combustion 450, la turbine du module de détente 460 entraîne le compresseur du module de compression 445 et l'alternateur du module de production d'énergie électrique 465.

La sortie du module de détente 460 est reliée à une entrée d'un module de production de vapeur 470. Ce dernier comporte un serpentin reçu dans une chaudière. Le serpentin reçoit en entrée de l'eau et produit en sortie de la vapeur d'eau. Pour la vaporisation de l'eau, sous l'action de la chaleur d'une flamme, la chaudière reçoit en entrée du gaz naturel, de l'air et des résidus de combustion issus du module de combustion 455, après qu'ils ont traversé le module de détente 460.

Comme dans toute installation réalisée à partir du nécessaire selon l'invention, l'installation 4 comporte une unité centrale de pilotage 475 reliée par un réseau 480 aux interfaces de communication E/S des unités locales de gestion de chacun des modules fonctionnels.

Les équipements utilisateurs 4A et 4B sont reliés à l'unité centrale de pilotage 475 par un réseau 480 pour indiquer à celle-ci les besoins en ressources produits en sortie des modules 465 et 470 respectivement.

Comme dans toute installation réalisée à partir du nécessaire selon l'invention, l'installation est gérée par l'unité centrale de pilotage 475, qui adresse à chacun des modules fonctionnels des ordres de commande et reçoit de ceux-ci des messages d'information.

La standardisation des entrées, des sorties et des interfaces de communication permet une réduction du coût global de réalisation et d'exploitation de plusieurs installations de traitement du fluide, tout en satisfaisant les besoins des équipements consommateurs disposés en aval.

La présence dans chaque module fonctionnel d'une unité locale de gestion assurant la gestion du fonctionnement du module à partir des ordres de commande reçus de l'unité centrale de pilotage permet une configuration simple et rapide de l'installation, seule l'unité centrale de pilotage devant être configurée et programmée pour répondre aux besoins des équipements utilisateurs.

Les installations décrites ici sont destinées au traitement essentiellement de gaz. Toutefois, le nécessaire selon l'invention peut comporter des modules fonctionnels permettant le traitement de liquides ou de matières pulvérulentes.

De plus, l'installation décrite ici permet la gestion des pannes des modules fonctionnels, grâce au retour des états de ceux-ci vers l'unité centrale de pilotage.

Un nécessaire de construction tel que décrit ici est particulièrement utile pour le traitement de gaz, notamment la séparation des gaz de l'air.

## Revendications

1. Nécessaire de construction de plusieurs installations industrielles complexes (1, 2, 4) pour le traitement de fluides, **caractérisé en ce qu'**il comporte :
- plusieurs ensembles (10, 15, 20, 25, 30, 35, 45, 50, 55, 60, 65, 70) de plusieurs modules fonctionnels (110, 115, 120, 125, 130, 135, 145, 150, 210, 215, 220, 225, 230, 235, 245, 250, 310, 315, 320, 325, 330, 335, 345, 350, 445, 455, 460, 465, 470), dans lesquels :
- chaque module fonctionnel comportant au moins une entrée et au moins une sortie pour le passage d'un fluide d'une installation industrielle et étant apte à réaliser une opération de transformation physique élémentaire sur le fluide, ainsi qu'une unité locale de gestion (ULG) du module fonctionnel commandant le fonctionnement du module fonctionnel pour la mise en oeuvre de l'opération élémentaire associée, l'unité locale de gestion (ULG) comportant une interface de communication (E/S),
- tous les modules fonctionnels d'un même ensemble (10, 15, 20, 25, 30, 35, 45, 50, 55, 60, 65, 70) sont adaptés pour réaliser la même opération de transformation élémentaire sur un fluide, et sont réalisés de manière standard, de sorte que les spécificités des entrées, des sorties et des interfaces de communication (E/S) de tous les modules fonctionnels d'un même ensemble sont analogues, et
- les modules fonctionnels sont adaptés pour être associés fonctionnellement les uns aux autres par leurs entrées et sorties dans des installations industrielles, afin d'assurer des opérations de transformations élémentaires successives sur le fluide,
lequel nécessaire comporte en outre, pour chaque installation industrielle (1, 2, 4), une unique unité centrale de pilotage (175, 275, 475), adaptée pour piloter l'installation industrielle associée (1, 2, 4), en adressant des ordres de pilotage aux unités locales de gestion (ULG) des modules fonctionnels standards de l'installation industrielle, au travers des interfaces de communication (E/S) reliées à l'unité centrale de pilotage (175, 275, 475) par un réseau de communication (180, 280, 480).

2. Nécessaire selon la revendication 1, **caractérisé en ce que** l'unité locale de gestion (ULG) de chaque module fonctionnel standard est adaptée pour adresser à l'unité centrale de pilotage (175, 275, 475) de l'installation, des messages d'information représentatifs de l'état de fonctionnement du module fonctionnel, ou de l'état du fluide sur lequel opère le module fonctionnel.

3. Nécessaire selon la revendication 1 ou 2, **caractérisé en ce que** l'unité centrale de pilotage (175, 275, 475) de chaque installation (1, 2, 4) comporte des moyens de recueil des besoins des équipements utilisateurs (1A, 1B, 1C, 1D, 2A, 2B, 4A, 4B) reliés en sortie de l'installation, au travers d'un réseau de transfert de données (185, 285, 485).

4. Nécessaire selon l'une quelconque des revendications précédentes, **caractérisé en ce qu'**il comporte un ensemble de modules standards d'alimentation (290) adaptés pour assurer l'alimentation en énergie d'une partie des modules fonctionnels de chaque installation sous la commande de l'unité de pilotage (275) de l'installation.

5. Nécessaire selon l'une quelconque des revendications précédentes, **caractérisé en ce qu'**il comporte un ensemble de modules standards de contrôle (140, 340) adaptés pour relever des informations sur le fluide circulant d'une installation et transmettre ces informations à l'unité centrale de pilotage (175) de ladite installation.

6. Nécessaire selon l'une quelconque des revendications précédentes, **caractérisé en ce qu'**il comporte un ensemble de modules standards de génération d'énergie électrique (465) adaptés pour assurer la production d'électricité à partir d'énergie fournie par d'autres modules standards (460) de l'installation.

7. Procédé de construction de plusieurs installations industrielles complexes (1, 2, 4) pour le traitement de fluides, **caractérisé en ce qu'**il comporte les étapes consistant à :
A) fabriquer des ensembles (10, 15, 20, 25, 30, 35, 45, 50, 55, 60, 65, 70) de plusieurs modules fonctionnels (110, 115, 120, 125, 130, 135, 145, 150, 210, 215, 220, 225, 230, 235, 245, 250, 310, 315, 320, 325, 330, 335, 345, 350, 445, 455, 460, 465, 470),
- chaque module fonctionnel comportant au moins une entrée et au moins une sortie pour le passage d'un fluide d'une installation industrielle et étant apte à réaliser une opération de transformation physique élémentaire sur le fluide, ainsi qu'une unité locale de gestion (ULG) du module fonctionnel commandant le fonctionnement du module fonctionnel pour la mise en oeuvre de l'opération élémentaire associée, l'unité locale de gestion (ULG) comportant une interface de communication (E/S)
- tous les modules fonctionnels d'un même ensemble (10, 15, 20, 25, 30, 35, 45, 50, 55, 60, 65, 70) sont adaptés pour réaliser la même opération de transformation élémentaire sur un fluide, et sont réalisés de manière standard, de sorte que les spécificités des entrées, des sorties et des interfaces de communication (E/S) de tous les modules fonctionnels d'un même ensemble sont analogues ;
B) fabriquer pour chaque installation industrielle, une unité centrale de pilotage (175, 275, 475) adaptée pour piloter l'installation industrielle associée, en adressant des ordres de pilotage aux unités locales de gestion (ULG) de chaque module fonctionnel standard de l'installation, au travers des interfaces de communication (E/S) reliées à l'unité centrale de pilotage (175, 275, 475) par un réseau de communication (180, 280, 480) ;
C) associer fonctionnellement, dans chaque installation industrielle (1, 2, 4), les modules fonctionnels les uns aux autres par leurs entrées et sorties, afin d'assurer les opérations élémentaires successives sur le fluide de chaque installation industrielle complexe ; et
D) installer dans chaque installation industrielle (1, 2, 4) une unité centrale de pilotage (175, 275, 475) reliée aux interfaces de communication (E/S) de tous les modules fonctionnels standards de l'installation par un réseau de communication (180, 280, 480).

8. Procédé selon la revendication 7, **caractérisé en ce qu'**au moins un des fluides est un gaz.

9. Procédé selon la revendication 8 pour le traitement des gaz de l'air.

## Claims

1. Outfit for constructing several complex industrial installations (1, 2, 4) for the treatment of fluids, **characterized in that** it comprises:
- several assemblies (10, 15, 20, 25, 30, 35, 45, 50, 55, 60, 65, 70) of several functional modules (110, 115, 120, 125, 130, 135, 145, 150, 210, 215, 220, 225, 230, 235, 245, 250, 310, 315, 320, 325, 330, 335, 345, 350, 445, 455, 460, 465, 470), in which:
- each functional module comprises at least one inlet and at least one outlet for the passage of a fluid of an industrial installation and is capable of performing an elemental physical transformation operation on the fluid, together with a local management unit (ULG) for managing the functional module, controlling the operation of the functional module for implementing the associated elemental operation, the local management unit (ULG) comprising a communications interface (E/S),
- all the functional modules of one same assembly (10, 15, 20, 25, 30, 35, 45, 50, 55, 60, 65, 70) are designed to perform the same elemental transformation operation on a fluid and are produced as a standard construction, so that the specifics of the inlets, outlets and communications interfaces (E/S) of all the functional modules of one same assembly are similar, and
- the functional modules are designed to be functionally associated with one another via their inlets and outlets in industrial installations so as to perform successive elemental transformation operations on the fluid,
which outfit further comprises, for each industrial installation (1, 2, 4), a single central control unit (175, 275, 475) designed to control the associated industrial installation (1, 2, 4) by sending commands to the local management units (ULG) that manage the standard functional modules of the industrial installation, through the communications interfaces (E/S) connected to the central control unit (175, 275, 475) via a communications network (180, 280, 480).

2. Outfit according to Claim 1, **characterized in that** the local management unit (ULG) managing each standard functional module is designed to send the central control unit (175, 275, 475) of the installation informative messages representing the operating status of the functional module, or the status of the fluid on which the functional module performs its operation(s).

3. Outfit according to Claim 1 or 2, **characterized in that** the central control unit (175, 275, 475) of each installation (1, 2, 4) comprises means for registering the requirements of the user equipment items (1A, 1B, 1C, 1D, 2A, 2B, 4A, 4B) connected at the output of the installation, through a data transfer network (185, 285, 485).

4. Outfit according to any one of the preceding claims, **characterized in that** it comprises an assembly of standard power supply modules (290) designed to supply power to some of the functional modules of each installation under the control of the installation control unit (275).

5. Outfit according to any one of the preceding claims, **characterized in that** it comprises an assembly of standard monitoring modules (140, 340) designed to collect information about the fluid flowing through an installation and to transmit this information to the central control unit (175) of the said installation.

6. Outfit according to any one of the preceding claims, **characterized in that** it comprises an assembly of standard modules (465) for generating electrical power designed to produce electricity from energy supplied by other standard modules (460) of the installation.

7. Method for constructing several complex industrial installations (1, 2, 4) for the treatment of fluids, **characterized in that** it comprises the steps consisting in:
A) manufacturing assemblies (10, 15, 20, 25, 30, 35, 45, 50, 55, 60, 65, 70) of several functional modules (110, 115, 120, 125, 130, 135, 145, 150, 210, 215, 220, 225, 230, 235, 245, 250, 310, 315, 320, 325, 330, 335, 345, 350, 445, 455, 460, 465, 470), in which:
- each functional module comprising at least one inlet and at least one outlet for the passage of a fluid of an industrial installation and being capable of performing an elemental physical transformation operation on the fluid, together with a local management unit (ULG) for managing the functional module, controlling the operation of the functional module for implementing the associated elemental operation, the local management unit (ULG) comprising a communications interface (E/S),
- all the functional modules of one same assembly (10, 15, 20, 25, 30, 35, 45, 50, 55, 60, 65, 70) are designed to perform the same elemental transformation operation on a fluid and are produced as a standard construction, so that the specifics of the inlets, outlets and communications interfaces (E/S) of all the functional modules of one same assembly are similar;
B) manufacturing, for each industrial installation, a central control unit (175, 275, 475) designed to control the associated industrial installation by sending commands to the local management units (ULG) that manage each standard functional module of the installation, through the communications interfaces (E/S) connected to the central control unit (175, 275, 475) via a communications network (180, 280, 480);
C) within each industrial installation (1, 2, 4), functionally associating the functional modules with one another via their inlets and outlets so as to perform the successive elemental operations on the fluid of each complex industrial installation; and
D) in each industrial installation (1, 2, 4) installing a central control unit (175, 275, 475) connected to the communications interfaces (E/S) of all the standard functional modules of the installation by a communications network (180, 280, 480).

8. Method according to Claim 7, **characterized in that** at least one of the fluids is a gas.

9. Method according to Claim 8, for treating the gases of the air.

## Patentansprüche

1. Konstruktionszubehör für mehrere komplexe Industrieinstallationen (1, 2, 4) für die Behandlung von Fluiden, **dadurch gekennzeichnet, dass** es umfasst:
- mehrere Einheiten (10, 15, 20, 25, 30, 35, 45, 50, 55, 60, 65, 70) für mehrere Funktionsmodule (110, 115, 120, 125, 130, 135, 145, 150, 210, 215, 220, 225, 230, 235, 245, 250, 310, 315, 320, 325, 330, 335, 345, 350, 445, 455, 460, 465, 470), wobei:
- jedes Funktionsmodul mindestens einen Eingang und mindestens einen Ausgang für das Durchströmen eines Fluids von einer Industrieanlage umfasst und in der Lage ist, einen Vorgang der elementaren physikalischen Umwandlung am Fluid durchzuführen, sowie eine lokale Steuereinheit (ULG) für das Funktionsmodul umfasst, die die Funktion des Funktionsmoduls für den Einsatz des zugehörigen Elementarvorgangs steuert, wobei die lokale Steuereinheit (ULG) eine Kommunikationsschnittstelle (E/S) umfasst,
- alle Funktionsmodule einer selben Einheit (10, 15, 20, 25, 30, 35, 45, 50, 55, 60, 65, 70) derart ausgeführt sind, dass sie denselben elementaren Umwandlungsvorgang an einem Fluid durchführen, und auf standardmäßige Weise ausgeführt sind, so dass die spezifischen Eigenschaften der Eingänge, der Ausgänge und der Kommunikationsschnittstellen (E/S) aller Funktionsmodule einer selben Einheit analog sind, und
- die Funktionsmodule derart ausgeführt sind, dass sie funktionell miteinander mit ihren Eingängen und Ausgängen in Industrieanlagen verbunden werden, um aufeinander folgende elementare Umwandlungsvorgänge am Fluid sicher zu stellen,
wobei das Zubehör ferner für jede Industrieanlage (1, 2, 4) eine einzige Steuerzentrale (175, 275, 475) umfasst, die derart ausgeführt ist, dass sie die zugehörige Industrieanlage (1, 2, 4) steuert, wobei sie Steuerbefehle an die lokalen Steuereinheiten (ULG) der Standard-Funktionsmodule der Industrieanlage über die Kommunikationsschnittstellen (E/S) richtet, die mit der Steuerzentrale (175, 275, 475) durch ein Kommunikationsnetz (180, 280, 480) verbunden sind.

2. Zubehör nach Anspruch 1, **dadurch gekennzeichnet, dass** die lokale Steuereinheit (ULG) jedes Standard-Funktionsmoduls derart ausgeführt ist, dass sie an die Steuerzentrale (175, 275, 475) der Anlage Informationsmeldungen richtet, die für den Funktionszustand des Funktionsmoduls oder den Zustand des Fluids, das das Funktionsmodul bearbeitet, repräsentativ sind.

3. Zubehör nach Anspruch 1 oder 2, **dadurch gekennzeichnet, dass** die Steuerzentrale (175, 275, 475) jeder Anlage (1, 2, 4) Mittel zum Sammeln der Bedürfnisse der Benutzerausrüstungen (1A, 1B, 1C, 1D, 2A, 2B, 4A, 4B) umfasst, die am Ausgang der Anlage über ein Datenübertragungsnetz (185, 285, 485) angeschlossen sind.

4. Zubehör nach einem der vorhergehenden Ansprüche, **dadurch gekennzeichnet, dass** es eine Einheit von Standard-Versorgungsmodulen (290) umfasst, die derart ausgeführt sind, dass sie die Stromversorgung eines Teils der Funktionsmodule jeder Anlage unter der Steuerung der Steuerzentrale (275) der Anlage sicher stellen.

5. Zubehör nach einem der vorhergehenden Ansprüche, **dadurch gekennzeichnet, dass** es eine Einheit von Standard-Kontrollmodulen (140, 340) umfasst, die derart ausgeführt sind, dass sie Informationen über das in einer Anlage zirkulierende Fluid einholen und diese Informationen an die Steuerzentrale (175) der Anlage weiterleiten.

6. Zubehör nach einem der vorhergehenden Ansprüche, **dadurch gekennzeichnet, dass** es eine Einheit von Standard-Stromerzeugungsmodulen (465) umfasst, die derart ausgeführt sind, dass sie die Erzeugung von Strom aus einer von anderen Standardmodulen (460) der Anlage gelieferten Energie sicher stellen.

7. Konstruktionsverfahren für mehrere komplexe Industrieanlagen (1, 2, 4) für die Behandlung von Fluiden, **dadurch gekennzeichnet, dass** es die folgenden Schritte umfasst, bestehend aus:
A) Herstellen von Einheiten (10, 15, 20, 25, 30, 35, 45, 50, 55, 60, 65, 70) für mehrere Funktionsmodule (110, 115, 120, 125, 130, 135, 145, 150, 210, 215, 220, 225, 230, 235, 245, 250, 310, 315, 320, 325, 330, 335, 345, 350, 445, 455, 460, 465, 470),
- wobei jedes Funktionsmodul mindestens einen Eingang und mindestens einen Ausgang für das Durchströmen eines Fluids von einer Industrieanlage umfasst und in der Lage ist, einen Vorgang der elementaren physikalischen Umwandlung am Fluid durchzuführen, sowie eine lokale Steuereinheit (ULG) für das Funktionsmodul umfasst, die die Funktion des Funktionsmoduls für den Einsatz des zugehörigen Elementarvorgangs steuert, wobei die lokale Steuereinheit (ULG) eine Kommunikationsschnittstelle (E/S) umfasst,
- wobei alle Funktionsmodule einer selben Einheit (10, 15, 20, 25, 30, 35, 45, 50, 55, 60, 65, 70) derart ausgeführt sind, dass sie denselben elementaren Umwandlungsvorgang an einem Fluid durchführen, und auf standardmäßige Weise ausgeführt sind, so dass die spezifischen Eigenschaften der Eingänge, der Ausgänge und der Kommunikationsschnittstellen (E/S) aller Funktionsmodule einer selben Einheit analog sind;
B) Herstellen einer Steuerzentrale für jede Industrieanlage (175, 275, 475), die derart ausgeführt ist, um die zugehörige Industrieanlage zu steuern, wobei sie Steuerbefehle an die lokalen Steuereinheiten (ULG) jedes Standard-Funktionsmoduls der Anlage über Kommunikationsschnittstellen (E/S) richtet, die mit der Steuerzentrale (175, 275, 475) durch ein Kommunikationsnetz (180, 280, 480) verbunden sind;
C) Verbinden der Funktionsmodule funktionell in jeder Industrieanlage (1, 2, 4) miteinander mit ihren Eingängen und Ausgängen, um die aufeinander folgenden elementaren Vorgänge am Fluid jeder komplexen Industrieanlage sicher zu stellen; und
D) Installieren einer Steuerzentrale (175, 275, 475) in jeder Industrieanlage (1, 2, 4), die mit den Kommunikationsschnittstellen (E/S) aller Standard-Funktionsmodule der Anlage durch ein Kommunikationsnetz (180, 280, 480) verbunden ist.

8. Verfahren nach Anspruch 7, **dadurch gekennzeichnet, dass** mindestens eines der Fluide ein Gas ist.

9. Verfahren nach Anspruch 8 für die Behandlung der Gase der Luft.
